# EUROPÄISCHE PATENTSCHRIFT

(11) **EP 2 379 401 B1**
(45) Veröffentlichungstag und Bekanntmachung des Hinweises auf die Patenterteilung: **23.04.2014**
(21) Anmeldenummer: 10700212.3
(22) Anmeldetag: 13.01.2010
(51) Int. Cl.: B62J 1/00

(54) **MOTORRADSITZBANK**
MOTORBIKE SEAT
SIÈGE DE MOTOCYCLETTE

(30) Priorität: 20.01.2009 DE 102009005325
(43) Veröffentlichungstag der Anmeldung: 26.10.2011
(73) Patentinhaber: Bayerische Motoren Werke Aktiengesellschaft, 80809 München (DE)
(72) Erfinder: DOHMEN, Christoph, 41849 Wassenberg (DE)
(74) Vertreter: Diener, Reinhold Jürgen
(86) Internationale Anmeldenummer: PCT/EP2010/000114
(87) Internationale Veröffentlichungsnummer: WO 2010/083950

(56) Entgegenhaltungen:
- US-A- 4 765 432

## Beschreibung

Die Erfindung betrifft einen in Fahrzeuglängsrichtung ausgerichteten Motorradsitz gemäß dem Oberbegriff des Patentanspruches 1 sowie ein Verfahren zum Dämpfen eines in Fahrzeuglängsrichtung ausgerichteten Motorradsitzes gemäß den Merkmalen des Patentanspruches 14.

Ein Motorrad gemäß den Merkmalen des Oberbegriffs des Patentanspruches 1 ist aus der US 4 765 432 bekannt.

Motorradsitze, insbesondere Motorradsitze für Sport- oder Touringmotorräder, bestehen aus einem ergonomischen Sitzkörper aus verschiedenen Schaumstoffen. Diese Sitzkörper dienen neben der Führung des Beckens in Längsrichtung dem Zweck, von der Straße über das Fahrzeug auf den Fahrer wirkende Schwingungen und Stöße abzumildern. Je nach Ausführungsart werden derartige Sitze auch als Sitzbank bezeichnet. Wegen eines jedoch im Gegensatz zu 4-rädrigen Kraftfahrzeugen weit größeren Verhältnisses zwischen Fahrzeug- und Fahrergewicht kann diese Aufgabe nicht im gleichen Maße wie bei 4-rädigen Kraftfahrzeugen von dieser meist 5 bis 20 cm dicken Schaumstoffschicht erfüllt werden. Dies resultiert in einer überdurchschnittlichen Belastung des Rückens des Motorradfahrers während der Fahrt, und damit neben gesundheitlichen Risiken in einem Komfortverlust bei längeren Fahrten.

Um eine Komfortsteigerung beim Fahren zu erreichen, sieht die DE 102005055921 A1 eine spezielle Wahl des Schaumstoffs und der Schaumstoffumhüllung vor, um durch verbesserte Luftzirkulation einem Hitzestau im Sitzbereich zu vermeiden. Die DE 10253452 A1 und die DE 19719965 C2 versuchen den Missstand durch Konturveränderungen der Sitzoberfläche über eine Hebelmechanik oder über mittels Druckluft befüllbaren Luftkissen zu beheben.

Diese Vorgehensweisen können den statischen Sitzkomfort verbessern, nehmen jedoch keinen Einfluss auf die Stärke der von der Fahrbahn auf den Fahrzeugführer und/oder den Beifahrer übertragenen Schwingungen und Stöße.

Der Erfindung liegt daher die Aufgabe zu Grunde, einen in Fahrzeuglängsrichtung ausgerichteten Motorradsitz zu schaffen, der den Sitzkomfort insbesondere bezüglich der von der Fahrbahn auf den Fahrer und/oder Beifahrer übertragenen Schwingungen und Stöße verbessert.

Diese Aufgabe wird durch die Merkmale des Patentanspruches 1 bzw. 14 gelöst.

Es werden somit die auf das Fahrwerk des Fahrzeugs wirkenden Kräfte sehr früh durch einen vorderradachsnah platzierten Sensor gemessen und aus den Messwerten des Sensors werden die an der Sitzbodenplatte zu erwartenden Kräfte im Voraus bestimmt. Durch die Phasenverschiebung des Fahrwerks des Fahrzeugs wirkt eine am Vorderrad gemessene Kraft oder Beschleunigung je nach Geschwindigkeit des Fahrzeugs erst zu einem späteren Zeitpunkt an dem Motorradsitz.

Da der Motorradsitz oder eine Motorradsitzbank hinterradachsnah angeordnet ist, kann einige Zeit zwischen einem am Vorderrad auftretenden Schlag und einer notwendigen Dämpfung an der Sitzbank verstreichen bevor auf die Dämpfung an der Sitzbank eingewirkt wird. Wenn das Vorderrad beispielsweise über einen Ast fährt, ist eine Dämpfung am Sitz erst dann sinnvoll und notwendig, wenn das Hinterrad bis zum Ast gefahren ist. Somit kann die Dämpfung am Sitz optimal eingestellt werden bevor das Hinterrad über den Ast rollt. Dadurch kann einerseits sichergestellt werden, dass nur im genau richtigen Zeitpunkt die Dämpfungswirkung an der Motorradsitzbank wirkt, und andererseits können auch trägere Dämpfungssysteme verwendet werden, da etwas Zeit verbleibt, um vor dem Schlag auf das Hinterrad die Dämpfung optimal einzustellen.

Während die Regel-/Steuerelektronik es ermöglicht, die Dämpfung der Motorradsitzbank optimal auf die durch Unebenheiten der Fahrbahn induzierten Kräfte anzupassen, ermöglicht das Feder-Dämpfer-System zwischen einer Sitzoberplatte und einer Sitzbodenplatte einen einfachen Einbau der Motorradsitzbank bei herkömmlichen Motorrädern ohne in den prinzipiellen Aufbau der Karosse einzugreifen. Insbesondere wird durch das Hinzufügen dieses weiteren Feder-Dämpfer-Systems ohne Eingriffe in das sicherheitsrelevante Feder-Dämpfer-System des Fahrzeugs, der Fahrkomfort bezüglich der durch Fahrbahnunebenheiten induzierten Belastungen des Fahrers mit wenig Aufwand gesenkt.

Bei der DE 27 06 835 A1 wird keine Regel-/Steuerelektronik mit einem vorderradachsnah platzierten Sensor vorgesehen und das Feder-Dämpfer-System ist nicht zwischen einer Sitzoberplatte und einer Sitzbodenplatte angeordnet.

Die US 4 632 355 A zeigt eine Motorradsitzbank mit Feder-Dämpfer-System. Hier ist das Feder-Dämpfer-System jedoch nicht unter der Sitzfläche der Motorradsitzbank angeordnet.

Die DE 202 10 280 U1 beschreibt keine in Fahrtrichtung ausgerichtete Motorradsitzbank. Sie zeigt jedoch ebenfalls ein Feder-Dämpfer-System, das Stöße und Schwingungen vom Fahrzeug auf den Fahrer aufnimmt und reduziert. Die am Beispiel des Fahrrades beschriebene Steuerungselektronik fängt mit einem vorderradachsnah platzierten Sensor Schläge, die auf die Lenkergabel wirken, ab und für Schläge, die auf den Sattel wirken, ist ein hinterradachsnah platzierter Sensor angeordnet. Die Lehre der Entgegenhaltung zeigt gerade, dass man jeweils dort, wo gedämpft werden muss, einen extra Sensor anordnen muss, selbst wenn dann für ein Fahrrad jeweils ein Sensor für die Gabel und ein Sensor für den Sattel vorgesehen werden muss.

Der erfindungsgemäße Aufbau führt zu einer Reduktion der benötigten Teile, wie Sensoren und Steuerungselektronikteilen. Darüber hinaus führt er zu einem einfachen leichten Aufbau. Vor allem ermöglicht der erfindungsgemäße Aufbau es, vorausschauend zu reagieren. Das heißt, der Sensor nimmt frühzeitig ein Signal auf und leitet dieses Signal an die Steuerungselektronik, die daraufhin - vorzugsweise auf die Geschwindigkeit des Motorrades abgestimmt - zeitversetzt den Dämpfer einstellt.

Nach der Erfindung befindet sich demnach zwischen Sitzfläche und Fahrzeug ein Feder-Dämpfer-System, welches seinen Federungs- und Dämpfungseigenschaften entsprechend Fahrzeug und Fahrer bezüglich Schwingungen und Stößen teilweise von einander isoliert.

Durch Hinzufügen dieses weiteren Feder-Dämpfer-Systems in der Motorradsitzbank kann ohne Eingriff in das sicherheitsrelevante Feder-Dämpfer-System des Fahrzeugs der Fahrkomfort bezüglich der durch Fahrbahnunebenheiten induzierten Belastungen des Fahrers mit wenig Aufwand gesenkt werden.

Mindestens ein Dämpfer ist als ein in seiner Dämpfungswirkung einstellbarer Dämpfer ausgeführt, welcher über eine mit Daten von verschieden platzierten Sensoren versorgten Regel-/Steuerelektronik entsprechend der vorliegenden Fahrsituationen eingestellt wird. Ein vorderradachsnah, vorzugsweise entlang der Wirklinie der von der Fahrbahn auf das Fahrzeug wirkenden Schwingungen und Stöße vor dem Fahrwerk des Fahrzeugs, platzierter Sensor misst, vorzugsweise als Beschleunigung, die kommende auf den Fahrer und/oder Beifahrer wirkende Belastung vor der Phasenverschiebung durch das Fahrwerk des Fahrzeugs. Dieser Sensor erlaubt es der Regel-/Steuerelektronik, eine zukünftig auf die Sitzunterseite wirkende Kraft im Voraus zu bestimmen, um den Dämpfer zeitlich exakt auf die komme Belastung einzustellen. Hierbei kann die Laufzeit der Anregung aus dem kontinuierlichen Vergleich des Signals des vorderrachachsnah gelegenen Sensors und des Signals eines Sensors an der Sitzunterseite bestimmt werden. Alternativ kann die Signallaufzeit aus den Kennlinien des Fahrwerks des Fahrzeugs und der aktuellen Geschwindigkeit (z.B. über das Tachosignal oder Daten eines Fahrzeug-Bus-System) ermittelt werden. Weitere Sensoren können hierbei die Beschleunigungen an Sitzober- und Sitzunterseite, die Schräglage des Fahrzeugs, sowie die aktuelle Auslenkung der Federn und des Dämpfers bestimmen. Alternativ kann die an der Sitzoberseite wirkende Beschleunigung aus der an der Sitzunterseite wirkenden Beschleunigung und der Veränderung der Auslenkung der Federn und des Dämpfers bestimmt werden. In einer zweckmäßigen Ausführung wird durch die durch die Fahrzeugelektrik mit Spannung versorgte Regel-/Steuerelektronik aus den gewonnenen Sensorwerten eine ideale Dämpfungsstärke anhand von gespeicherten Datentabellen ermittelt. Eine andere Ausführung zur Bestimmung des Wertes der optimalen Dämpfung sieht die numerische Lösung der Differenzialgleichungen des Zweimassenschwingers (Anregung Fahrbahn - Feder-Dämpfer-System Fahrzeug -Masse Fahrzeug - Feder-Dämpfer-System Motorradsitz - Masse Fahrer/Beifahrer) vor.

Eine dritte Ausführungsvariante sieht vor, den Wert der idealen Dämpfung mittels einfacher Algorithmen zu bestimmen, die verschiedene Fahrsituationen beurteilen und die benötigte Dämpfungsstärke bestimmen. Denkbar ist eine getrennte Analyse der Sensorwerte auf den primär vorliegenden Schwingungsanteil, die Untersuchung der Sensorwerte auf Einzelereignisse wie Schlaglöcher oder Fräskanten, die Überprüfung auf Beschleunigung/Bremsen/Schräglagen und die Dämpferansteuerung in Abhängigkeit vom Restfederweg der Sitzbank

Ein mögliches Verfahren zur Dämpferansteuerung in Abhängigkeit vom Restfederweg der Sitzbank sieht vor, ab einer gewissen, durch einen Parameter festgelegten Auslenkung von der Mittelstellung und einer Bewegung, die die Auslenkung verstärkt, die Dämpferkraft zu erhöhen. Hierbei kann die durch den vorderradachsnah platzierten Sensor gemessene und an der Sitzunterseite zu erwartende Beschleunigung zusammen mit den anliegenden Beschleunigungen an Sitzunter- und Oberseite dazu genutzt werden, die benötigte Dämpferkraftänderung optimal auf den vorhandenen Restfederweg einzustellen.

Ein mögliches Verfahren zur allgemeinen Fahrbahnanalyse sieht vor, die Dämpferkraft zu verringern, wenn die Anregungsfrequenz innerhalb eines gewählten Bereiches liegt. Hierzu kann mittels der zu erwartenden Anregung an der Sitzunterseite die Dämpferkraft auf ein Maß eingestellt werden, das den Federweg des Systems optimal ausnutzt.

Ein mögliches Verfahren zur Stoßdämpfung von Einzelereignissen, wie Schlaglöchern oder Fräskanten, sieht vor, ein solches Einzelereignis durch das Überschreiten einer Grenzbeschleunigung über eine gewisse Dauer zu erkennen, und die Dämpfungskraft für eine festgelegte Dauer zu verringern. Alternativ kann die Dauer der Dämpfungskraftreduktion aus den an der Sitzunterseite oder den an der Sitzunter- und Oberseite gemessenen Beschleunigungswerten bestimmt werden.
In einer bevorzugten Ausführung wird der Zeitpunkt der Verringerung der Dämpferkraft aus der Laufzeit der Anregung von der Fahrbahn zur Sitzunterseite bestimmt.

Hierbei können die verschiedenen Verfahren innerhalb eines kontinuierlich durchlaufenen Programms nach ihrer Wichtigkeit für die Schwingungs- und Stoßreduktion der Sitzoberseite unterschiedlich priorisiert werden. Zusätzlich können die Vergleichsparameter, anhand deren die Algorithmen die benötigte Dämpfungsstärke bestimmen, veränderbar gestaltet werden. Bei Fahrzeugen mit veränderbarer Fahrwerkscharakteristik ist in einer bevorzugten Ausführung in Abhängigkeit von der gewählten Fahrwerkscharakteristik die automatische Änderung der Vergleichsparameter vorzusehen.

In einer bevorzugten Ausführung ist die Regel-/Steuerelektronik updatefähig vorzusehen, um Veränderungen oder Verbesserungen der Regelung im Nachhinein vornehmen zu können, und/oder spezielle Fahrerwünsche realisieren zu können.

Das Feder-Dämpfer-System, bestehend aus mindestens einer Feder und mindestens einem Dämpfer, ist zwischen einer Sitzoberplatte und einer Sitzbodenplatte angeordnet, die in vorteilhafter Anordnung über einen Scherenhub miteinander verbunden sind. Hierdurch erhält der obere Teil der Sitzbank trotz der Federung eine gute Seitenstabilität. In einer zweckmäßigen Ausführung sehen die Sitzoberplatte an ihrer Unterseite und die Sitzbodenplatte an ihrer Oberseite Befestigungsmöglichkeiten für die mindestens eine Feder und den mindestens einen Dämpfer vor. Die Oberseite der Sitzoberplatte ist zweckmäßig ergonomisch ausgeformt, besitzt mindestens jedoch eine Befestigungsmöglichkeit für eine ergonomisch geformte Sitzfläche. Die Unterseite der Sitzbodenplatte sieht bevorzugt eine Befestigungsmöglichkeit an einer fahrzeugfesten Auflagefläche vor. In einer möglichen Ausführungsvariante ist der Dämpfer mit der Sitzbodenplatte und der Sitzoberplatte direkt verbunden. Eine weitere Möglichkeit sieht den Einbau des Dämpfers in der Ebene einer der beiden Sitzplatten (Sitzoberplatte oder Sitzbodenplatte) vor. Hierbei verbindet der Dämpfer die entsprechende Sitzplatte mit dem in der Ebene freilaufenden Teil des Scherenhubs.

Eine alternative Ausführung sieht vor, das Feder-Dämpfer-System in einem geschlossenen, nur in vertikaler Richtung beweglichen Modul möglichst geringer Bauhöhe zu platzieren, das den Einbau in Seriensitzbänke erlaubt.

Zweckmäßigerweise sind Sitzoberplatte und Sitzbodenplatte als Formteil ausgeführt. In einer weiteren möglichen Ausführung sind Sitzoberplatte und Sitzbodenplatte als Rohrrahmengestell ausgeführt.

Die in vorteilhafter Anordnung zwischen Sitzoberplatte und Sitzbodenplatte angeordneten Federn können in einer einfachen Ausführung mittels Distanzscheiben vorgespannt werden, um die Federwirkung dem Fahrergewicht anzupassen. In einer komfortableren Ausführung kann diese Anpassung mittels eines Einstellmechanismus zur Veränderung des Federwegs erfolgen.

Ein mögliches Verfahren zur Dämpferansteuerung in Abhängigkeit vom Restfederweg der Sitzbank sieht vor, ab einer gewissen, durch einen Parameter festgelegten Auslenkung von der Mittelstellung und einer Bewegung, die die Auslenkung vergrößert, die Dämpferkraft zu erhöhen. Hierbei kann die durch den vorderradachsnah platzierten Sensor gemessene und an der Sitzunterseite zu erwartende Beschleunigung zusammen mit den anliegenden Beschleunigungen an Sitzunter- und Oberseite dazu genutzt werden, die benötigte Dämpferkraftänderung optimal auf den vorhandenen Restfederweg einzustellen.

Weitere vorteilhafte Ausgestaltungen ergeben sich aus der nachfolgenden Beschreibung anhand der dazugehörigen Zeichnungen.

Es zeigen
- Fig. 1: ein Motorrad mit einer Sitzbank in schematischer Darstellung,
- Fig. 2: in vergrößertem Maßstab, eine perspektivische Ansicht des in Fig. 1 gekennzeichneten Ausschnitts II,
- Fig. 3: eine perspektivische Ansicht des in Fig. 1 gekennzeichneten Ausschnitts II, diesmal mit weiteren Details,
- Fig. 4: eine schematische Darstellung der hier beschriebenen Motorradsitzbank, inklusive der Regel-/Steuerelektronik und ihren Abhängigkeiten,

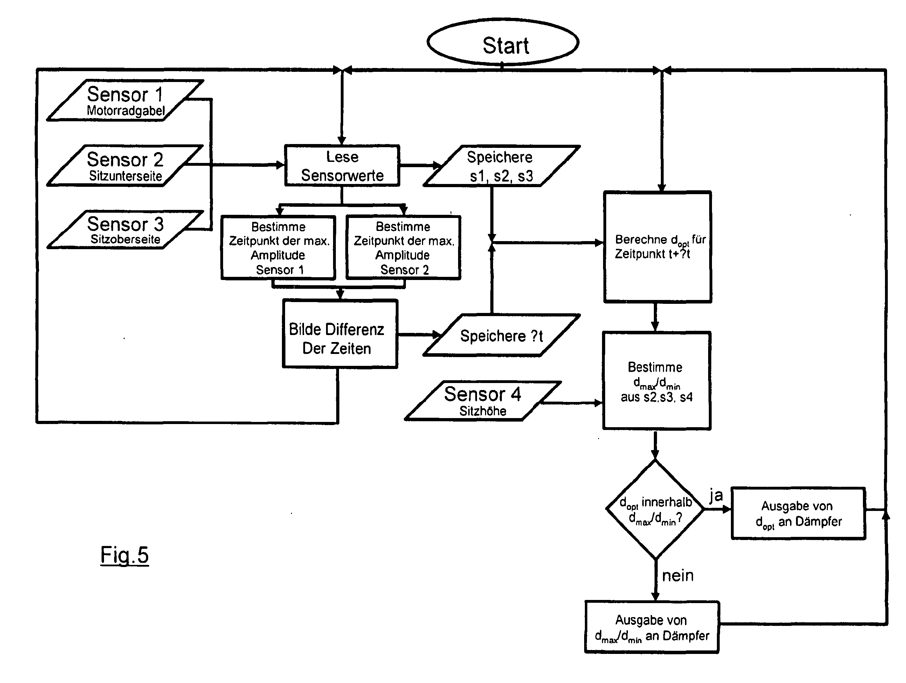

- Fig. 5: ein mögliches Ablaufdiagramm zur Fahrsituationsabhängigen Steuerung des einstellbaren Dämpfers.

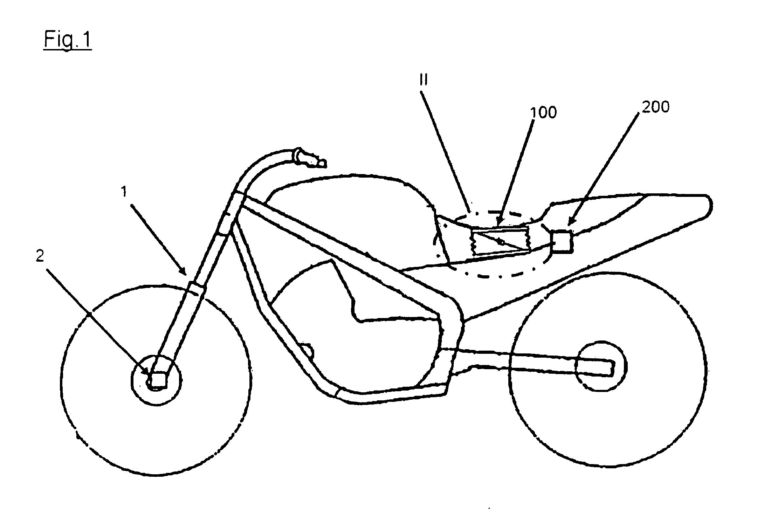

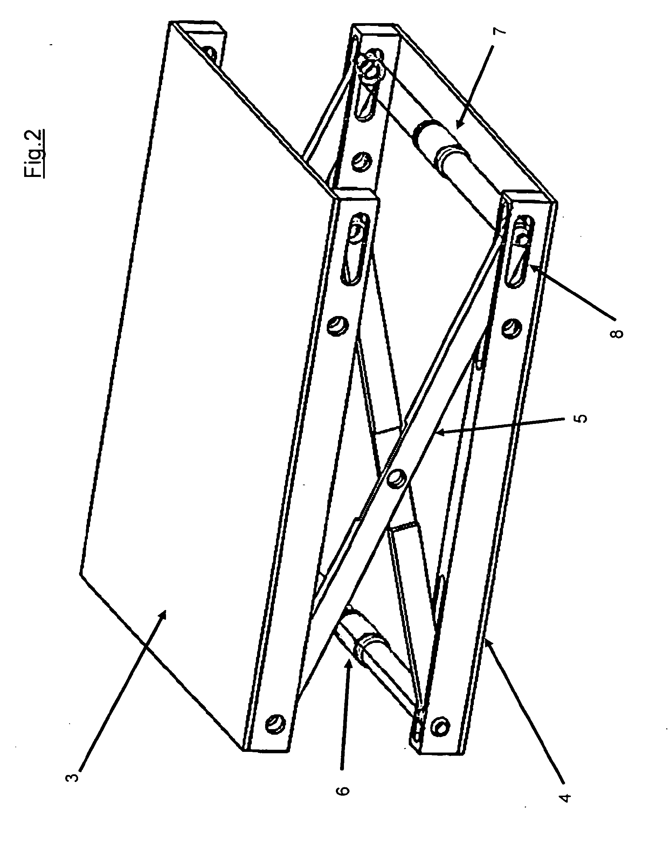

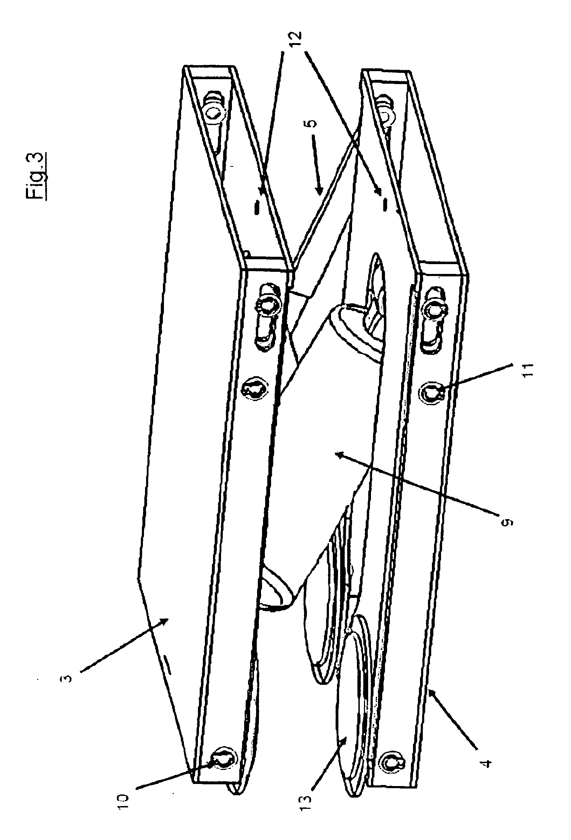

Das Motorrad in Fig. 1 ist von üblicher Bauart, auf die Beschreibung von für die Erfindung unnötiger Einzelheiten wurde daher verzichtet. Wichtig im Zusammenhang mit der vorliegenden Erfindung ist die Lage des in Fig. 2 und Fig. 3 näher beschriebenen mechanischen Systems der Sitzbank 100, das Vorhandensein einer beliebig am Fahrzeug platzierten Regel-/Steuerelektronik 200, sowie der entlang der Wirklinie der von der Fahrbahn auf das Fahrzeug wirkenden Schwingungen und Stöße vor dem Fahrwerk 1 des Fahrzeugs gelegene Sensor 2. Entsprechend der Zeichnung ist das mechanische System der Sitzbank in seiner Wirkung in diesem Fall beispielhaft auf den Sitzplatz des Fahrers beschränkt.

Fig. 2 zeigt das mechanische System der Sitzbank mit den Einzelheiten Sitzoberplatte 3, Sitzbodenplatte 4 und einen die beiden Platten verbindenden Scherenhub 5. In dieser beispielhaften Darstellung ist ein Dämpfereinbau in Ebene der Sitzbodenplatte zwischen einem ortsfesten Punkt 6 der Sitzbodenplatte und einem Punkt 7 des freilaufenden Teils 8 des Scherenhubs vorgesehen.

Eine alternative Anordnung des Dämpfers ist in Fig. 3 aufgezeigt. Hierbei verbindet der hier dargestellte Dämpfer 9 mit seiner Wirklinie die Sitzbodenplatte 4 direkt mit der Sitzoberplatte 3 über die den jeweiligen Platten zugeordneten ortsfesten Achsen 10 und 11. Zusätzlich ist in Fig. 3 eine Erweiterung der Sitzoberplatte 3 und Sitzbodenplatte 4 abgebildet. Im rechten Teil der Darstellung ist in Form eines Loches 12 eine einfache Möglichkeit zur Aufnahme eines wie im linken Teil der Zeichnung dargestellten möglichen Federhalters 13 vorgesehen. In dieser beispielhaften Anordnung ist der Einsatz von drei Federn und einem Dämpfer innerhalb des mechanischen Systems der Motorradsitzbank vorgesehen. Das vordere Gestänge des Scherenhubs 5 wurde der Übersicht halber in Fig. 3 nicht erneut dargestellt.

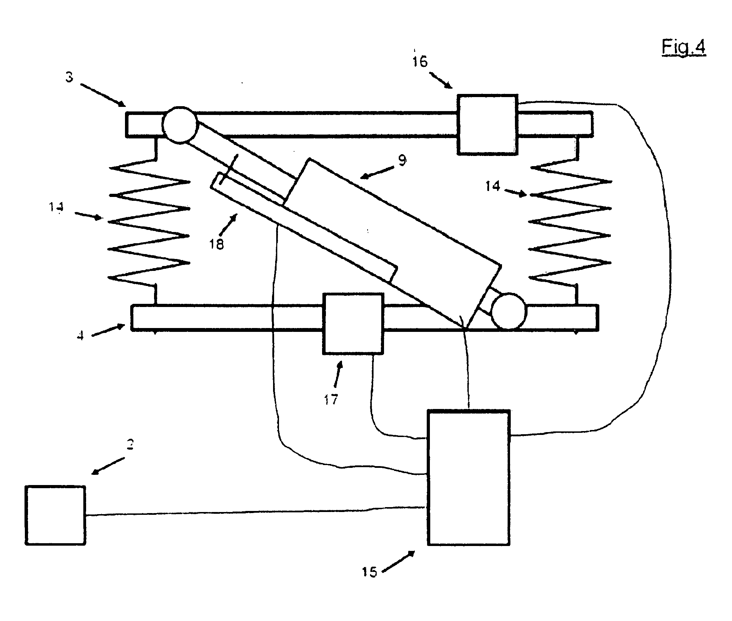

Ein mögliches schematisches Zusammenspiel des mechanischen Systems der Motorradsitzbank aus den Komponenten Sitzoberplatte 3, Sitzbodenplatte 4, Dämpfer 9 und Federn 14 mit der Regel-/Steuerelektronik 15 und dem vorderradachsnah platzierten Sensor 2, den Sensoren an Sitzunter- und Oberseite 16, 17, und dem Sensor zur Messung der Sitzauslenkung 18 zeigt Fig. 4.

Neben dem in Fig. 1 bereits beschriebenen entlang der Wirklinie der von der Fahrbahn auf das Fahrzeug wirkenden Schwingungen und Stöße vor dem Fahrwerk 1 des Fahrzeugs gelegenen Sensor 2 befinden sich in dieser exemplarischen Anordnung weiter ein Sensor 16 zur Messung der Beschleunigungen an der Sitzoberplatte 3, ein Sensor 17 zur Messung der Beschleunigungen an der Sitzbodenplatte 4 und ein Sensor 18 zur Messung der Sitzauslenkung (Höhe zwischen Sitzoberplatte 3 und Sitzbodenplatte 4) am Dämpfer 9.

Die Regel-/Steuerelektronik 15 ist neben der Verbindung zu den Sensoren 2, 16, 17, 18 mit der Spannungsversorgung 19 des Motorrads und dem in seiner Dämpfungswirkung einstellbaren Dämpfer 9 verbunden.

## Patentansprüche

1. In Fahrzeuglängsrichtung ausgerichteter Motorradsitz, mit
• einem unter einer Sitzfläche des Motorradsitzes angeordneten Feder-Dämpfer-System, welches Stöße und Schwingungen vom Fahrzeug auf den Fahrer oder Beifahrer aufnimmt und reduziert,
• einer Regel-/Steuerelektronik (15), der ein von einem Sensor (2) erzeugtes Signal zugeführt wird, wobei die Regel-/Steuerelektronik (15) einen Dämpfer des Feder-Dämpfer-Systems auf die momentane Fahrsituation einstellt,
***dadurch gekennzeichnet, dass***
der Sensor (2) vorderradachsnah angeordnet ist und das Feder-Dämpfer-System zwischen einer Sitzoberplatte (3) und einer Sitzbodenplatte (4) angeordnet ist oder in einer Ebene einer der beiden Sitzplatten.

2. Motorradsitz nach Anspruch 1, ***gekennzeichnet durch*** Sensoren (2, 16-18) die die aktuellen Beschleunigungs- und/oder Sitzhöhenwerte messen und an eine Regel-/Steuerelektronik (15) übergeben.

3. Motorradsitz nach Anspruch 1 oder 2, ***dadurch gekennzeichnet, dass*** der vorderradachsnah platzierte Sensor (2) die durch Unebenheiten der Fahrbahn auf das Fahrzeug wirkenden Kräfte als Beschleunigungen misst.

4. Motorradsitz nach einem der vorhergehenden Ansprüche, ***dadurch gekennzeichnet, dass*** die Regel-/Steuerelektronik (15) und der regelbare Dämpfer (9) von der Fahrzeugelektrik (19) versorgt werden.

5. Motorradsitz nach einem der vorhergehenden Ansprüche, ***dadurch gekennzeichnet, dass*** die Sitzoberplatte (3) und die Sitzbodenplatte (4) über einen Scherenhub (5) miteinander verbunden sind.

6. Motorradsitz nach einem der vorhergehenden Ansprüche, ***dadurch gekennzeichnet, dass*** die Sitzoberplatte (3) an ihrer Unterseite Befestigungsmöglichkeiten (6, 7, 10, 11, 12, 13) für Federn (14) und Dämpfer (9) vorsieht.

7. Motorradsitz nach einem der vorhergehenden Ansprüche, ***dadurch gekennzeichnet, dass*** die Sitzbodenplatte (3) an ihrer Oberseite (6, 7, 10, 11, 12, 13) Befestigungsmöglichkeiten für Federn (14) und Dämpfer (9) vorsieht.

8. Motorradsitz nach einem der vorhergehenden Ansprüche, ***dadurch gekennzeichnet, dass*** die Sitzbodenplatte (4) an ihrer Unterseite eine Befestigungsmöglichkeit an einer fahrzeugfesten Auflagefläche vorsieht.

9. Motorradsitz einem der vorhergehenden Ansprüche, ***dadurch gekennzeichnet, dass*** der Dämpfer (9) die Sitzoberplatte (3) und die Sitzbodenplatte (4) direkt miteinander verbindet.

10. Motorradsitz nach einem der vorhergehenden Ansprüche, ***dadurch gekennzeichnet, dass*** der Dämpfer (9) die Sitzbodenplatte (4) und einen in der Ebene der Sitzbodenplatte (4) freilaufenden Teil (8) eines Scherenhubs (5) miteinander verbindet.

11. Motorradsitz nach einem der vorhergehenden Ansprüche, ***dadurch gekennzeichnet, dass*** der Dämpfer (9) die Sitzoberplatte (3) und einen in der Ebene der Sitzoberplatte (3) freilaufenden Teils (8) eines Scherenhubs (5) miteinander verbindet.

12. Motorradsitz einem der vorhergehenden Ansprüche, ***dadurch gekennzeichnet, dass*** Federn (14) Sitzoberplatte (3) und Sitzbodenplatte (4) miteinander verbinden.

13. Motorradsitz nach Anspruch 12, ***dadurch gekennzeichnet, dass*** die Länge der Federn (14) mittels eines Einstellmechanismus veränderbar ist.

14. Verfahren zum Dämpfen eines in Fahrzeuglängsrichtung ausgerichteten Motorradsitzes nach einem der vorangehenden Ansprüche, bei dem
• durch Unebenheiten der Fahrbahn induzierte, auf das Fahrwerk des Fahrzeugs wirkende Kräfte vorderradachsnah mittels eines Sensors gemessenen werden,
• an der Sitzbodenplatte zu erwartende Kräfte im Voraus bestimmt werden und
• die Dämpfung des Feder-Dämpfer-Systems auf die an der Sitzbodenplatte erwarteten Kräfte eingestellt werden.

15. Verfahren nach Anspruch 14, ***dadurch gekennzeichnet, dass*** ab einer gewissen, durch einen Parameter festgelegten Auslenkung von einer Mittelstellung und einer Bewegung, die die Auslenkung vergrößert, die Dämpferkraft erhöht wird.

16. Verfahren nach einem der Ansprüche 14 bis 15, ***dadurch gekennzeichnet, dass*** die Regel-/Steuerelektronik (15) die Dämpfereinstellung anhand von gespeicherten Datentabellen bestimmt.

17. Verfahren nach einem der Ansprüche 14 bis 16, ***dadurch gekennzeichnet, dass*** die Regel-/Steuerelektronik (15) die optimale Dämpfereinstellung durch numerisches Lösen der Differentialgleichungen der Bewegung bestimmt.

18. Verfahren nach einem der Ansprüche 14 bis 17, ***dadurch gekennzeichnet, dass*** die Regel-/Steuerelektronik (15) die optimale Dämpfereinstellung mittels eines Algorithmus bestimmt.

## Claims

1. A motorcycle seat aligned in the longitudinal direction of the vehicle, comprising
• a spring and shock-absorber system disposed under the surface of the motorcycle seat and reducing impacts and vibrations of the vehicle acting on the driver or passenger, and
• an open-loop/closed-loop electronic unit (15) supplied with a signal generated by a sensor (2), wherein the unit (15) adjusts a shock absorber in the spring and shock-absorber system to the instantaneous driving situation,
**characterised in that**
the sensor (2) is disposed near the front wheel axle and the spring and shock-absorber system is disposed between a top seat plate (3) and a seat base plate (4) or in the same plane as one of the two plates.

2. A motorcycle seat according to claim 1, **characterised by** sensors (2, 16-18) which measure the current acceleration and/or seat heights and deliver them to an open-loop/closed-loop electronic unit (15).

3. A motorcycle seat according to claim 1 or claim 2, **characterised in that** the sensor (2) disposed near the front wheel axle measures forces in the form of accelerations due to bumpy places on the road and acting on the vehicle.

4. A motorcycle seat according to any of the preceding claims, **characterised in that** the unit (15) and the adjustable shock absorber (9) are energised by the vehicle electric system (19).

5. A motorcycle seat according to any of the preceding claims, **characterised in that** the top plate (3) and the base plate (4) are connected to one another by a scissor jack (5).

6. A motorcycle seat according to any of the preceding claims, **characterised in that** the top plate (3) has fastening means (6, 7, 10, 11, 12, 13) for springs (14) and shock-absorbers (9) on its underside.

7. A motorcycle seat according to any of the preceding claims, **characterised in that** on its top (6, 7, 10, 11, 12, 13) the base plate (3) has fastening means for springs (14) and a shock-absorber (9).

8. A motorcycle seat according to any of the preceding claims, **characterised in that** on its underside the base plate (4) has a means for fastening to a bearing surface fixed to the vehicle.

9. A motorcycle seat according to any of the preceding claims, **characterised in that** the shock absorber (9) directly connects the top plate (3) to the base plate (4).

10. A motorcycle seat according to any of the preceding claims, **characterised in that** the shock absorber (9) connects the base plate (4) to a part (8) of a scissor jack which freewheels in the plane of the base plate (4).

11. A motorcycle seat according to any of the preceding claims, **characterised in that** the shock absorber (9) connects the top plate (3) to a part (8) of a scissor jack (5) which freewheels in the plane of the top plate (3).

12. A motorcycle seat according to any of the preceding claims, **characterised in that** springs (14) connect the top plate (3) to the base plate (4).

13. A motorcycle seat according to claim 12, **characterised in that** the length of the springs (14) can be varied by an adjusting mechanism.

14. A method of absorbing shocks on a motorcycle seat aligned in the longitudinal direction of the vehicle according to any of the preceding claims, wherein
• forces induced by bumpy parts of the road and acting on the running gear of the vehicle are measured by a sensor near the front-wheel axle,
• the expected forces on the base plate are determined in advance and
• the shock absorption by the spring and shock-absorber system is adjusted to the expected forces acting on the base plate.

15. A method according to claim 14, **characterised in that** the damping effect is increased above a certain deviation, determined by a parameter, from a central position and above a speed which increases the deviation.

16. A method according to claim 14 or claim 15, **characterised in that** the openloop/closed-loop electronic unit (15) determines the shock-absorber adjustment on the basis of stored data tables.

17. A method according to any of claims 14 to 16, **characterised in that** the unit (15) determines the optimum shock-absorber adjustment by digital solution of the differential equations of motion.

18. A method according to any of claims 14 to 17, **characterised in that** the unit (15) determines the optimum shock-absorber position by using an algorithm.

## Revendications

1. Siège de motocyclette orienté dans la direction longitudinale du véhicule comportant :
• un système d'amortissement élastique monté sous la surface d'assise du siège de motocyclette et qui reçoit et réduit les chocs et oscillations provenant du véhicule et transmis au conducteur ou à son accompagnateur,
• une électronique de régulation/commande (15) à laquelle est transmis un signal produit par un capteur (2), l'électronique de régulation/commande (15) réglant un amortisseur du système d'amortissement élastique en fonction de la situation de déplacement momentané,
**caractérisé en ce que**
le capteur (2) est monté à proximité de l'essieu avant et le système d'amortissement élastique est monté entre une plaque supérieure (3) du siège et une plaque inférieure (4) du siège, ou dans le plan de l'une de ces deux plaques de sièges.

2. Siège de motocyclette conforme à la revendication 1,
**caractérisé par**
des capteurs (2, 16-18) qui mesurent la valeur actuelle de l'accélération et/ou de la hauteur du siège et la transmettent à une électronique de régulation / commande (15).

3. Siège de motocyclette conforme à la revendication 1 ou 2,
**caractérisé en ce que**
le capteur (2) positionné à proximité de l'essieu avant mesure les forces agissant sur le véhicule du fait de déformations de la chaussée entant qu'accélérations.

4. Siège de motocyclette conforme à l'une des revendications précédentes,
**caractérisé en ce que**
l'électronique de régulation/commande (15) et l'amortisseur réglable (9) sont alimentés par le système électrique (19) du véhicule.

5. Siège de motocyclette conforme à l'une des revendications précédentes,
**caractérisé en ce que**
la plaque supérieure (3) du siège et la plaque inférieure (4) du siège sont reliées entre elles par l'intermédiaire d'organes de levage en ciseaux de type pantographe (5).

6. Siège de motocyclette conforme à l'une des revendications précédentes,
**caractérisé en ce que**
la plaque supérieure (3) du siège est équipée sur sa face inférieure de moyens de fixation (6, 7, 10, 11, 12 ,13) de ressorts (14) et d'un amortisseur (9).

7. Siège de motocyclette conforme à l'une des revendications précédentes,
**caractérisé en ce que**
la plaque inférieure (4) du siège est équipée sur sa face supérieure (6, 7, 10, 11, 12, 13) de moyens de fixation de ressorts (14) et d'un amortisseur (9).

8. Siège de motocyclette conforme à l'une des revendications précédentes,
**caractérisé en ce que**
la plaque inférieure (4) du siège est équipée sur sa face inférieure de moyens de fixation sur une surface d'appui solidaire du véhicule.

9. Siège de motocyclette conforme à l'une des revendications précédentes,
**caractérisé en ce que**
l'amortisseur (9) relie directement la plaque supérieure (3) du siège et la plaque inférieure (4) du siège.

10. Siège de motocyclette conforme à l'une des revendications précédentes,
**caractérisé en ce que**
l'amortisseur (9) relie la plaque inférieure (4) du siège et une partie (8) des organes de levage en ciseaux (5) se déplaçant librement dans le plan de la plaque inférieure (4) du siège.

11. Siège de motocyclette conforme à l'une des revendications précédentes,
**caractérisé en ce que**
l'amortisseur (9) relie la plaque supérieure (3) du siège et une partie (8) des organes de levage en ciseaux (5) se déplaçant librement dans le plan de la plaque supérieure (3) du siège.

12. Siège de motocyclette conforme à l'une des revendications précédentes,
**caractérisé en ce que**
des ressorts (14) relient la plaque supérieure (3) du siège et la plaque inférieure (4) du siège.

13. Siège de motocyclette conforme à la revendication 12,
**caractérisé en ce que**
la longueur des ressorts (14) peut être modifiée au moyen d'un mécanisme de réglage.

14. Procédé permettant d'amortir un siège de motocyclette orienté dans la direction longitudinale du véhicule conforme à l'une des revendications précédentes selon lequel :
• les efforts induits par des déformations de la chaussée et agissant sur la carrosserie du véhicule sont mesurés par un capteur à proximité de l'essieu avant,
• les efforts attendus sur la plaque inférieure du siège sont déterminés préalablement,
• l'amortissement du système d'amortissement élastique est réglé en fonction des efforts attendus sur la plaque inférieure du siège.

15. Procédé conforme à la revendication 14,
**caractérisé en ce que**
la force d'amortissement est augmentée à partir d'une déviation donnée déterminée par un paramètre par rapport à une position médiane et d'un mouvement qui augmente la déviation.

16. Procédé conforme à l'une des revendications 14 et 15,
**caractérisé en ce que**
l'électronique de régulation/commande (15) détermine le réglage de l'amortisseur à partir de tableaux de données enregistrés.

17. Procédé conforme à l'une des revendications 14 et 16,
**caractérisé en ce que**
l'électronique de régulation/ commande (15) détermine le réglage optimum de l'amortisseur par résolution numérique d'équations différentielles du mouvement.

18. Procédé conforme à l'une des revendications 14 et 17,
**caractérisé en ce que**
l'électronique de régulation/commande (15) détermine le réglage optimum de l'amortisseur au moyen d'un algorithme.
